## Europäisches Patentamt
## European Patent Office
## Office européen des brevets

(19)

(11) Veröffentlichungsnummer: **0 195 380**
**B1**

(12) # EUROPÄISCHE PATENTSCHRIFT

(45) Veröffentlichungstag der Patentschrift:
**12.07.89**

(51) Int. Cl.⁴: **H 01 B 1/12**

(21) Anmeldenummer: **86103456.9**

(22) Anmeldetag: **14.03.86**

(54) Verfahren zur Herstellung von elektrisch leitfähigen Schaumstoffen.

(30) Priorität: **20.03.85 DE 3510031**

(43) Veröffentlichungstag der Anmeldung:
**24.09.86 Patentblatt 86/39**

(45) Bekanntmachung des Hinweises auf die Patenterteilung:
**12.07.89 Patentblatt 89/28**

(84) Benannte Vertragsstaaten:
**BE DE FR GB NL**

(56) Entgegenhaltungen:
**EP-A-0 053 669**
**EP-A-0 145 843**
**EP-A-0 152 632**
**DE-A-3 200 073**
**DE-A-3 321 281**

(73) Patentinhaber: **BASF Aktiengesellschaft, Carl-Bosch- Strasse 38, D-6700 Ludwigshafen (DE)**

(72) Erfinder: **Naarmann, Herbert, Dr., Haardtblick 15, D-6719 Wattenheim (DE)**
Erfinder: **Woerner, Frank Peter, Dr., Am Altenbach 18, D-6706 Wachenheim (DE)**

EP 0 195 380 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von elektrisch leitfähigen Schaumstoffen, bei dem man in die Poren eines offenzelligen Schaumstoffs ein elektrisch leitfähiges Polymeres einbringt.

Nach einer Arbeit von K.C. Khulke und R.S. Mann, Journal of Polymer Science, Vol. 20 (1982), Seiten 1089 bis 1055, kann Pyrrol in wäßriger Lösung unter der Einwirkung von Kaliumpersulfat polymerisiert werden, so daß sich das Polymerisat in Form eines feinteiligen schwarzen Pulvers abscheidet.

Aus der älteren Patentanmeldung EP-A-84 108 455 ist ein Verfahren zur elektrochemischen Polymerisation von Pyrrol bekannt, bei dem man Pyrrol in Gegenwart von Leitsalzen in Elektrolytlösungsmitteln durch anodische Oxidation auf einer flächenförmig ausgebildeten Anode polymerisiert, wobei man als Flächenelement Stoffe mit großer Oberfläche, wie Gewebe, Gewirke, Geflechte oder Netze, bzw. poröse Stoffe, wie Polyurethanschaumstoffe und Schaumstoffe aus anderen thermoplastischen Kunststoffen mit offenen Zellen verwendet.

Aufgabenstellung der Erfindung ist es, ein Verfahren zur Herstellung von elektrisch leitfähigen Schaumstoffen zu schaffen, das in technisch einfacher Weise durchführbar ist und das elektrisch leitfähige Schaumstoffe mit besonders guten Materialeigenschaften liefert.

Die Aufgabe der Erfindung wird durch ein Verfahren zur Herstellung von elektrisch leitfähigen Schaumstoffen gelöst, bei dem man in die Zellen eines offenzelligen Schaumstoffes ein Monomeres, das ein elektrisch leitfähiges Polymeres zu bilden vermag und ein Oxidationsmittel einbringt und das Monomere polymerisiert. Ein weiterer Gegenstand der Erfindung ist die Verwendung der nach diesem Verfahren hergestellten elektrisch leitfähigen Schaumstoffe als Elektroden in elektrischen Elementen. Weitere Gegenstände der Erfindung sind der detaillierten Beschreibung im folgenden zu entnehmen.

Es hat sich gezeigt, daß nach dem erfindungsgemäßen Verfahren elektrisch leitfahige Schaumstoffe erhalten werden können, die z. B. mit Ableitern versehen als Elektroden Verwendung finden. Die Schaumstoffe finden unter anderem auch als elektrisch leitfähige Membranen, als Warmeschallabsorber oder als Abschirmungsmaterialien, gegebenenfalls mit Metallfolien oder Polypyrrolfolien Verwendung.

Zur Herstellung der elektrisch leitfähigen Schaumstoffe können alle Schaumstoffe verwendet werden, die offene Zellen haben, die mit der Umgebungsluft in Verbindung stehen. In Frage kommen insbesondere poröse Kunststoffe, wie schaumförmige Kunststoffe mit offenen Zellen. Besonders vorteilhaft eignen sich Polyurethan-Schaumstoffe (PUR-) mit offenen Zellen. Die Raumgewichte liegen bei 5 g/l bis zu 1000 g/l, vorzugsweise bei 10 bis 100 g/l. Über Polyurethan-Schaumstoffe finden sich z. B. Hinweise in Chemie-Lexikon von Römpp, 7. Auflage, Fransche Verlagshandlung W. Keller und Co., Stuttgart (1975), Band 5, Seite 2774.

Als Schaumstoffe eignen sich z. B. auch Melamin-Formaldehyd- oder Harnstoff-Formaldehyd-Harzschaumstoffe mit offenen Zellen. Besonders geeignete Melamin-Formaldehyd-Harzschaumstoffe sind beispielsweise in der EP-17 672 beschrieben. Es können aber auch offenzellige Schaumstoffe auf Basis von Thermoplasten, z. B. offenzellige Polyethylen- oder offenzellige Polystyrol-Schaumstoffe Verwendung finden.

Zur Herstellung der elektrisch leitfähigen Schaumstoffe lagert man in die Zellen des offenzelligen Schaumstoffes eine Schicht aus einem elektrisch leitfähigen Polymeren ein, die man durch Behandeln der die Polymeren bildenden Monomeren mit einem Oxidationsmittel, vorzugsweise in Gegenwart von Leitsalzen, erhält. Solche Monomeren, die mittels Oxidationsmittel polymerisiert werden können, sind z. B. Verbindungen aus der Klasse der fünfgliedrigen heterocyclischen Verbindungen mit einem konjugierten $\pi$-Elektronensystem die Stickstoff oder Schwefel als Heteroatom enthalten. Beispiele dieser Verbindungen sind solche aus der Klasse der Pyrrole und der Thiophene. Von den Pyrrolen eignen sich z. B. das unsubstituierte Pyrrol selbst aber auch N-substituierte Pyrrole wie N-Alkylpyrrol. Es konnen aber auch andere substituierte Pyrrole wie 3,4-Dialkylpyrrole oder 3,4-Dichlorpyrrole Verwendung finden. Von den Verbindungen der Klasse der Thiophene eignet sich insbesondere das unsubstituierte Thiophen selbst sowie 2- oder 3-Alkylthiophene, z. B. 2,3-Diethylthiophen. Diese genannten funfgliedrigen heterocyclischen Verbindungen können aber auch zusammen mit anderen copolymerisierbaren Verbindungen, wie z. B. Furanen, Thiazol, Oxazol oder Imidazol, polymerisiert werden. Es ist aber auch möglich durch chemische Oxidationsmittel Verbindungen wie Anilin oder Benzidin zu polymerisieren. Eine interessante Variante ist auch das Kachieren des Schaumstoffes z. B. mit Polypyrrol.

Als Oxidationsmittel verwendet man vorteilhaft Sauerstoff enthaltende Oxidationsmittel die, bezogen auf 1 Mol der zu polymerisierenden Verbindung, in Mengen von 0,2 bis 10 Molen Verwendung finden können. Größere Mengen an Oxidationsmittel ist nicht erforderlich, da die Menge ausreicht, den gesamten Ausgangsstoff in Polymere umzuwandeln. Die Polymerisation der Monomeren mittels des Oxidationsmittels erfolgt zweckmäßig in Lösung, wobei sich Wasser als Lösungsmittel gegebenenfalls in Abmischung mit organischen, mit Wasser mischbaren Lösungsmitteln bewährt hat. Es können aber auch organische Lösungsmittel, wie Dimethylsulfoxid, Methanol, Acetonitril, Ethylencarbonat, Propylencarbonat, Dioxan oder Tetrahydrofuran verwendet werden. Man arbeitet zweckmäßig so, daß die Lösungen 0,1 bis 50 %, vorzugsweise 1 bis 5 Gew.-%, des zu polymerisierenden Monomeren enthalten. Die Menge des zuzusetzenden Oxidationsmittels wird nach dem oben angegebenen Prinzip ermessen. Die Oxidation kann zweckmäßig bei Temperaturen zwischen -20 und 150°C erfolgen.

Die Polymerisation dieser Monomeren kann in Gegenwart von Leitsalzen erfolgen, die auch als Komplexierungsmittel oder Dotierungsmittel bezeichnet werden. Als Leitsalze haben sich z. B. $KHSO_4$, $Na_2SO_4$, HCOOH, $LiClO_4$, $HClO_4$, $NEt_4ClO_4$, $NBu_4ClO_4$, $KAlF_3$, $NaAlF_6$ $KBF_4$, $K_2ZrF_6$, $K_2NiF_4$, $HO_2(NO_3)_2$, $H_2SO_4$, $FeCl_3$, $NOPF_6$, $KAsF_6$ oder $NaPF_6$ bewährt. Die Konzentration der Leitsalze ist so bemessen, daß auf 3 Mol des eingesetzten Mononeren oder der Gemische der Monomeren mindestens 1 Mol der oben aufgeführten Leitsalze verwendet werden; werden beispielsweise $FeCl_3$ oder $FeClO_4$ verwendet, so sind solche Verbindungen Leitsalze und auch Oxidationsmittel.

Zum Einlagern der Schicht des Polymeren in die Zellen des als Matrix dienenden Schaumstoffes geht man zweckmäßig so vor, daß man zunächst eine Lösung des Monomeren und des Leitsalzes einbringt und danach den Werkstoff mit einer Lösung des Sauerstoff enthaltenden Oxidationsmittels behandelt. Monomeres und Oxidationsmittel können auch gleichzeitig in einer Lösung eingebracht werden.

Von den Oxidationsmitteln haben sich insbesondere Peroxosäuren und deren Salze, wie die Peroxodischwefelsäure und deren Alkali- und Ammoniumsalze bewährt. Vorzugsweise werden auch Peroxoborate oder Peroxochromate, wie Natriumperborat, Kaliumdichromat oder Eisenperchlorat, verwendet. Außerdem sind Permanganate, wie Kaliumpermanganat geeignet, wenn man diesem Permanganat geringe Mengen Säure zusetzt. Auch ist bevorzugt die Verwendung von Wasserstoffsuperoxid wobei hier die Anwesenheit von Leitsalzen unumgänglich ist.

Man wählt die Menge an Monomeren, die das leitfähige Polymere bilden so, daß etwa 10 bis 80 Gew.-% bezogen auf das Gewicht des Schaumstoffes, leitfähige Polymere entstehen.

Die Herstellung der elektrisch leitfähigen Schaumstoffe kann auch kontinuierlich erfolgen, indem man z. B. Streifen des Schaumstoffs in einer Lösung, die ein Leitsalz und das Monomere enthält, eintaucht, den so getrankten Schaum anschließend in eine Lösung bringt die Peroxiverbindung enthält und somit das Monomere polymerisiert.

Man kann die Schaumstoffe auch mit Ableitern versehen, die entweder mit elektrisch leitfähigen Schaumstoffen aufgebracht oder in diesen eingelagert sind, bevor Einlagerung der elektrisch leitfähigen Schicht erfolgt. Als Ableiter können Metall, Metallgewebe, Kohlenstoff-Fasern. Kohlenstoff-Faserfilme oder auch andere elektrisch leitfähige Polymere Verwendung finden.

In den erfindungsgemäß hergestellten elektrisch leitfähigen Schaumstoffen liegt das leitfähige Polymere als Komplexkation des Polymeren mit dem Gegenanion des Leitsalzes vor. Die elektrische Leitfähigkeit der Schaumstoffe liegt meist im Bereich von $10^{-3}$ bis $10^2$ S/cm. Die Schaumstoffe finden die oben genannten Anwendungen.

Die Erfindung wird durch die nachfolgenden Beispiele näher erläutert. Die in den Beispielen angegebenen Teile und Prozente beziehen sich auf das Gewicht.

## Beispiel 1

10 Teile eines Melamin-Formaldehyd-Harz-Schaumstoffes mit dem Raumgewicht 10 g/l werden mit 10 Teilen Pyrrol und 1 Teil $Fe(ClO_4)_3$ in 10 Teilen Propylencarbonat versetzt. Es wird ein Schaumstoff mit einer elektrischen Leitfähigkeit von $10^{-3}$ S/cm erhalten.

## Beispiel 2

Wird der im Beispiel 1 verwendete Schaumstoff auf einer Seite mit einem 30 µ dicken Polypyrrolfilm beschichtet und dann entsprechend Beispiel 1 modifiziert. Es wird ein Schaumstoff mit einer Leitfähigkeit von $10^{+1}$ S/cm erhalten.

## Beispiel 3

Wird wie in Beispiel 2 beschrieben gearbeitet jedoch eine 10 µ dicke Aluminiumfolie (20 µ dicke Polyacetylenfolie) als Beschichtung benutzt, so wird eine Leitfähigkeit von $5 \cdot 10^{+1}$ S/cm (70 S'/cm) erhalten. Die Leitfähigkeiten wurden jedoch nur im Schaumstoff gemessen, ohne den jeweiligen Ableiter.

## Beispiel 4

Wie in Beispiel 1 jedoch wird als Schaumstoff ein Polyurethan oder Polyethylen vom Raumgewicht 25 g/l verwendet, die elektrische Leitfähigkeit liegt jeweils bei $10^{-3}$ S/cm.

## Beispiel 5

10 Teile eines Schaumstoffs auf Basis von Polyethylen mit dem Raumgewicht 60 g/l werden mit 10 Teilen Anilin und 3 Teilen $HClO_4$ und 2 Teilen $Na_2S_2O_8$ versetzt und 1 Stunde bei 20°C gehalten. Die elektrische Leitfähigkeit des Schaumstoffs beträgt $10^{-3}$ S/cm. Der nach diesem Verfahren hergestellte Schaumstoff wird in Streifen auf 100 µ Dicke geschnitten und mit Graphit als Ableiter als Elektrodenmaterial verwendet.

## Beispiel 6

Der nach Beispiel 5 hergestellte elektrisch leitfähige Schaumstoff wird in einem Elektrolysegefäß in 5 %-iger wäßriger CuSO$_4$-Lösung als Kathode geschaltet und durch Abscheiden von 1 Teil Kupfer/10 Teilen modifiziertem Schaumstoff mit 2 mAp/cm$^2$ Stromdichte galvanisiert. Dieses Produkt ist als Elektrode oder Abschirmmaterial gegen elektromagnetische Wellen geeignet.

**Patentansprüche** für die
Vertragsstaatem: BE, NL

1. Verfahren zur Herstellung von elektrisch leitfähigen Schaumstoffen, dadurch gekennzeichnet, daß man in die Zellen eines offenzelligen Schaumstoffs ein Monomeres, das ein elektrisch leitfähiges Polymeres zu bilden vermag und ein Oxidationsmittel einbringt und das Monomere polymerisiert.

2. Verfahren nach Anspruch 1, dadurch gekennzeichnet, daß man das Monomere in Gegenwart eines Leitsalzes polymerisiert.

3. Verfahren nach Anspruch 1, dadurch gekenniezchnet, daß man als Monomere eine Verbindung aus der Klasse der Pyrrole oder Thiophene oder Anilin verwendet.

4. Verwendung der nach dem Verfahren nach Anspruch 1 erhaltenen leitfähigen Schaumstoffe als Elektroden in elektrischen Elementen.

**Patentansprüche** für die
Vertragsstaaten: DE, FR, GB

1. Verfahren zur Herstellung von elektrisch leitfähigen Schaumstoffen, dadurch gekennzeichnet, daß man in die Zellen eines offenzelligen Schaumstoffs mit einem Raumgewicht von 5 bis 1000 g/l ein Monomeres, das ein elektrisch leitfähiges Polymeres zu bilden vermag und ein Oxidationsmittel einbringt und das Monomere polymerisiert.

2. Verfahren nach Anspruch 1, dadurch gekennzeichnet, daß man das Monomere in Gegenwart eines Leitsalzes polymerisiert.

3. Verfahren nach Anspruch 1, dadurch gekennzeichnet, daß man als Monomere eine Verbindung aus der Klasse der Pyrrole oder Thiophene oder Anilin verwendet.

4. Verwendung der nach dem Verfahren nach Anspruch 1 erhaltenen leitfähigen Schaumstoffe als Elektroden in elektrischen Elementen.

**Claims** for the Contracting States: BE, NL

1. A process for the preparation of an electrically conductive foam, wherein a monomer which is capable of forming an electrically conductive polymer and an oxidizing agent are introduced into the cells of an open-cell foam, and the monomer is polymerized.

2. A process as claimed in claim 1, wherein the monomer is polymerized in the presence of a conductive salt.

3. A process as claimed in claim 1, wherein the monomer used is a compound from the class consisting of the pyrroles or thiophenes, or aniline.

4. Use of a conductive foam obtained by the process as claimed in claim 1 as an electrode in electrical cells.

**Claims** for the Contracting States: DE, FR, GB

1. A process for the preparation of an electrically conductive foam, wherein a monomer which is capable of forming an electrically conductive polymer and an oxidizing agent are introduced into the cells of an open-cell foam having a bulk density of from 5 to 1000 g/l, and the monomer is polymerized.

2. A process as claimed in claim 1, wherein the monomer is polymerized in the presence of a conductive salt.

3. A process as claimed in claim 1, wherein the monomer used is a compound from the class consisting of the pyrroles or thiophenes, or aniline.

4. Use of a conductive foam obtained by the process as claimed in claim 1 as an electrode in electrical cells.

**Revendications** pour les Etats
Contractants: BE, NL

1. Procédé de préparation de mousses conductrices de l'électricité, caractérisé en ce qu'on introduit dans les cellules d'une mousse à cellules ouvertes un monomère qui peut former un polymère conducteur de l'électricité, et un milieu d'oxydation, et on polymérise le monomère.

2. Procédé selon la revendication 1, caractérisé en ce qu'on polymérise le monomère en présence d'un sel conducteur.

3. Procédé selon la revendication 1, caractérisé en ce qu'on utilise comme monomère un composé de la classe des pyrroles, des thiophènes ou des anilines.

4. Utilisation des mousses conductrices obtenues par le procédé de la revendication 1, comme électrodes dans des éléments électriques.

**Revendications** pour les Etats
Contractants: DE, FR, GB

1. Procédé dé préparation de mousses conductrices de l'électricité, caractérisé en ce qu'on introduit dans les cellules d'une mousse à cellules ouvertes ayant une masse volumique de 5 à 1000 g/l un monomère qui peut former un polymère conducteur de l'électricité, et un milieu d'oxydation, et on polymérise le monomère.

2. Procédé selon la revendication 1, caractérisé en ce qu'on polymérise le monomère en présence d'un sel conducteur.

3. Procédé selon la revendication 1, caractérisé en ce qu'on utilise comme monomère un composé de la classe des pyrroles, des thiophènes ou des anilines.

4. Utilisation des mousses conductrices obtenues par le procédé de la revendication 1, comme électrodes dans des éléments électriques.